# EUROPEAN PATENT APPLICATION

(11) **EP 0 816 752 A1**
(43) Date of publication of application: **07.01.1998**
(21) Application number: 97304543.8
(22) Date of filing: 26.06.1997
(51) Int. Cl.: F21V 8/00

(54) **Drinks dispenser with illuminated display**

(30) Priority: 28.06.1996 GB 9613671
(71) Applicant: Gaskell and Chambers Limited, Wigston, Leicester LE8 2FL (GB)
(72) Inventor: Carter, Gary Stephen, Arnold, Nottingham NG5 6RX (GB)
(74) Representative: Sykes, John Christopher

(57) **Abstract**

A measured volume spirits dispenser having an illuminated panel display (18). The display typically has brand information etched or printed on the reverse side of the transparent panel (18), and a miniature cold cathode fluorescent lamp is used to illuminate the display by light projected from an illumination device (16) through one edge of the panel (18).

## Description

This invention relates to drinks dispensers, particularly those located behind a bar and visible to customers. The invention is particularly applicable to measured volume drinks dispensers which are frequently used to dispense spirits or fortified wines.

According to one aspect of the invention we provide a measured volume drinks dispenser having an illuminated panel display, the dispenser having a holder mounted thereon, said holder being adapted to receive and locate a sheet or slab of transparent material which has at least one straight edge, and means for directing a beam of light through said edge such that the beam will be internally reflected within said sheet or slab. The light beam is typically used to illuminate information e.g. a brand name or advertising slogan on or adjacent one face of the sheet or slab. The dispenser is preferably adapted to receive the outlet of a drinks container from above.

The light directing means is typically a slit which is parallel to the straight edge. This edge of the sheet or slab is typically bonded by transparent adhesive or held by a clip to the light directing means such that the slit is immediately adjacent the sheet or slab straight edge. The slit and straight edge may be substantially horizontally-extending, with the illumination being directed upwardly into the sheet or slab. Illumination may be provided by beams of light directed from more than one edge e.g. from above and below or from the sides. This may be particularly appropriate for larger sheets or slabs.

The light directing means also typically contains a light source, such as a cold cathode fluorescent lamp. This lamp may be connected to and driven by an inverter (a dc to ac converter using an oscillator) which may be mounted on the dispenser.

The drinks dispenser may have a measure with a transparent face. The sheet or slab may be mounted on the dispenser above the transparent measure face such that the displayed information is visible from the same side of the dispenser as the transparent face. When an inverter is mounted on the dispenser it is typically behind the sheet or slab or the holder therefor.

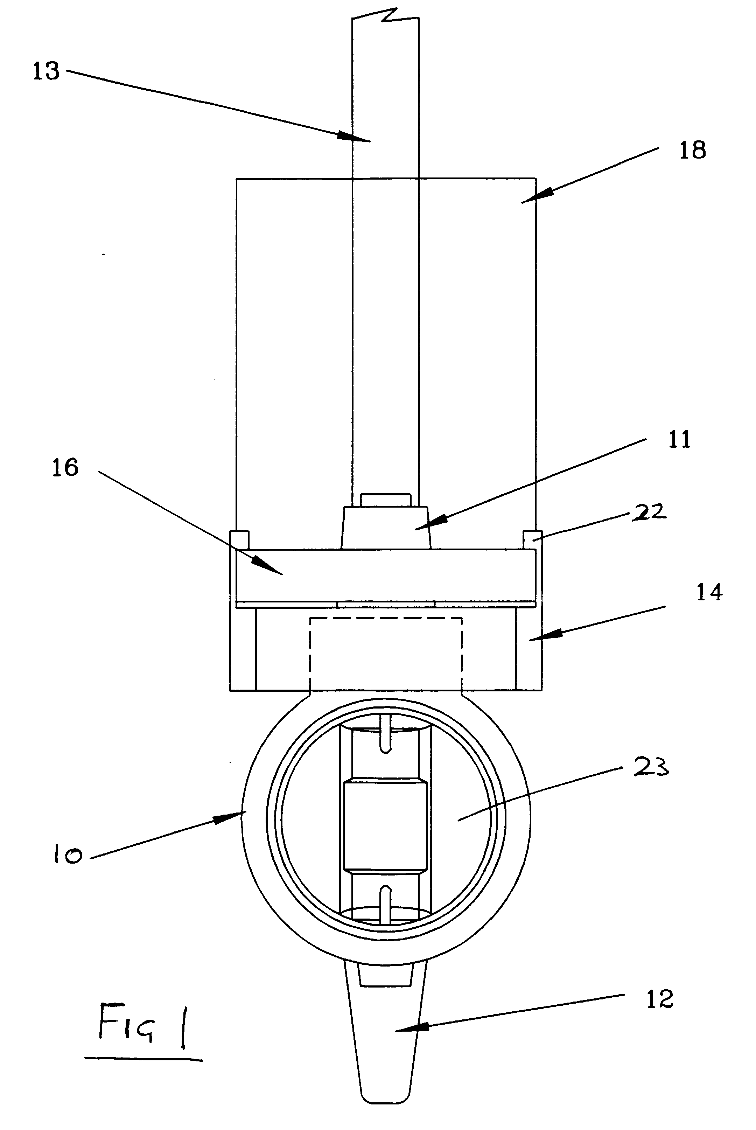

One embodiment of the dispenser will now be described, by way of example only, with reference to the accompanying illustrations in which
Figure 1 shows a front elevation of the dispenser;

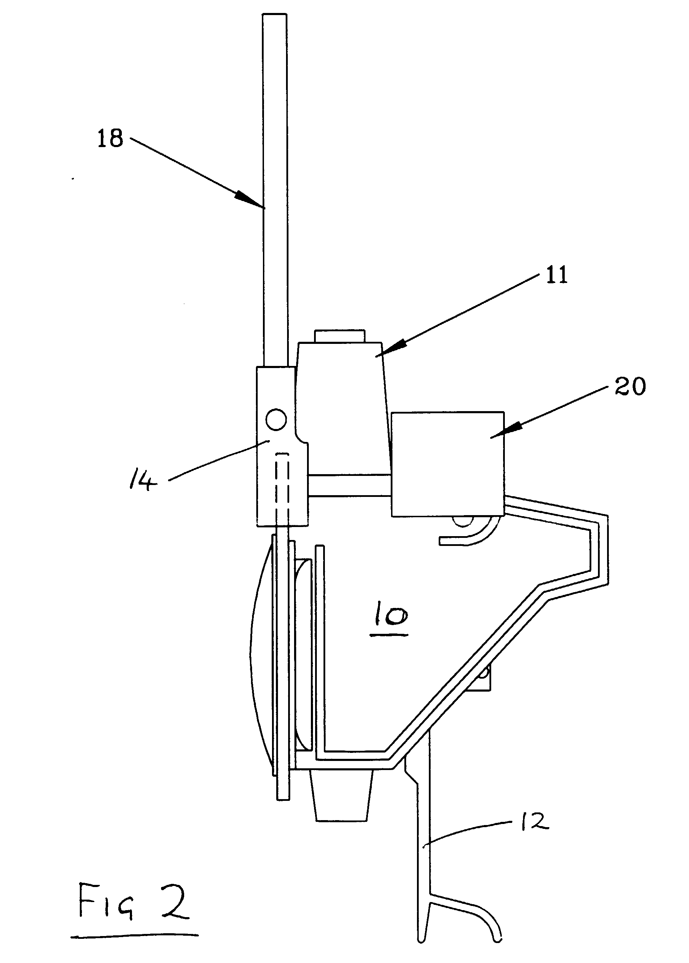

Figure 2 is a side elevation of the dispenser of Figure 1;

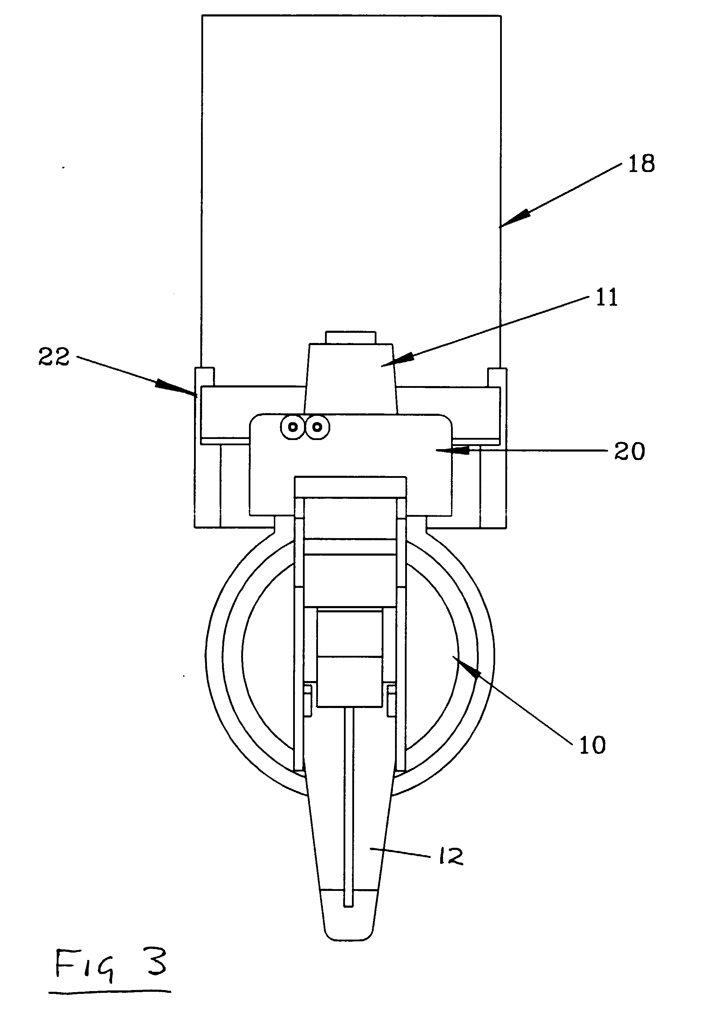

Figure 3 is a rear elevation of the dispenser of Figure 1; and

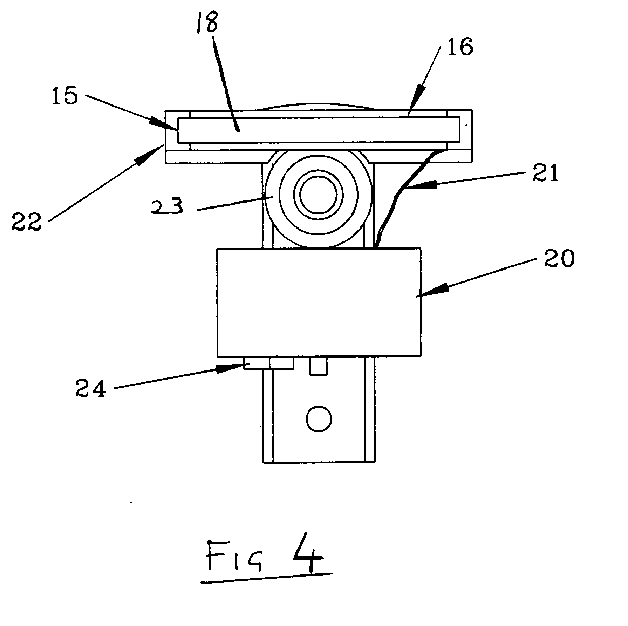

Figure 4 is a top view of the dispenser of Figure 1.

The spirit dispenser illustrated is capable of dispensing a measured volume into a glass. The dispenser has a body 10, from which a projection 11 extends upwardly and can fit within the neck of a bottle (not shown). Projection 11 is hollow and permits drink to pass into the dispenser from above. A lever 12, typically actuated by the pressure of a glass to be filled, is located below the body 10 and causes the dispenser, when actuated by the glass, to be emptied into the glass and to then be refilled under gravity from the bottle. The dispenser incorporates a measure 23 with a transparent face.

The dispenser is mounted on a rack (not shown) which is attached to the wall of the bar. In use, a number of dispensers are located side by side, each dispensing a different drink.

Extending from and above the dispenser body is a holder 14, which is clipped to the dispenser body 10. The holder 14 typically comprises one or more plastics mouldings and includes upstanding members 22 having vertical slots 15 which face one another. An illumination device 16 which comprises a light directing means fits between vertical slots 15. The light directing means includes a horizontal slit on the upper surface of illumination device 16.

A flat sheet or slab 18 of transparent plastics material is located by vertical slots 15 and extends substantially vertically from illumination device 16. One edge 19 of slab 18 is in contact with illumination device 16, whose horizontal slit is parallel to and directly below said edge 19.

Product information e.g. a brand name, is located on the rear side of slab 18. The brand name may be etched into the transparent plastic or alternatively the brand name may be printed or otherwise displayed on a sheet of plastics which is bonded to the rear face of slab 18.

An inverter 20 is mounted on body 10 to the rear of illumination device 16. The inverter is connected by cable 21 to a light source located within illumination device 16. The light source is a 1mm (or 2 or 2.5 mm) diameter miniature UV lamp running at 300V. The inverter takes a low voltage DC supply which is safe to use within the bar area.

The illumination device 16 has end members which fit into slots 15. Slab 18 is then located in slots 15 above so that it is in contact with device 16 and is adhesively bonded in slots 15 at its lower corners.

## Claims

1. A measured volume drinks dispenser characterised by an illuminated panel display, the dispenser having a holder (14) mounted thereon, said holder (14) being adapted to receive and locate a sheet or slab (18) of transparent material which has at least one straight edge, and means (16) for directing a beam of light through said edge such that the beam will be internally reflected within said sheet or slab (18).

2. A dispenser as claimed in Claim 1 characterised in that the light directing means (16) includes a slit which is parallel to said straight edge.

3. A dispenser as claimed in Claim 1 or Claim 2 characterised in that the said straight edge of the sheet or slab (18) is bonded or otherwise held into engagement with the light directing means (16).

4. A dispenser as claimed in Claim 2 or Claim 3 characterised in that said slit and said straight edge extend horizontally, with the illumination being directed upwardly into the sheet or slab (18).

5. A dispenser as claimed in any preceding claim characterised in that light directing means provides illumination from more than one edge of the sheet or slab (18).

6. A dispenser as claimed in any preceding claim characterised in that the light directing means (16) is associated with a light source such as a cold cathode fluorescent lamp.

7. A dispenser as claimed in Claim 6 characterised in that the light source is also mounted on the dispenser.

8. A dispenser as claimed in Claim 6 or Claim 7 characterised in that the lamp is connected to and driven by an inverter (20) which is mounted on the dispenser.

9. A dispenser as claimed in any preceding claim characterised in that the dispenser has a measure with a transparent face and that the sheet or slab (18) is mounted on the dispenser above the transparent measure face such that information displayed by virtue of its presence on or adjacent a planar surface of the slab or sheet (18) is visible from the same side of the dispenser as the transparent face.
